Europäisches Patentamt

European Patent Office

Office européen des brevets

(11) Publication number: **0 415 468 A2**

# EUROPEAN PATENT APPLICATION

(21) Application number: 90202046.0

(22) Date of filing: 26.07.90

(51) Int. Cl.5: **A23D 7/00, A23D 9/00**

(30) Priority: 30.08.89 GB 8919586

(43) Date of publication of application:
06.03.91 Bulletin 91/10

(84) Designated Contracting States:
AT BE CH DE DK ES FR GB GR IT LI NL SE

(71) Applicant: UNILEVER NV
Burgemeester s'Jacobplein 1 P.O. Box 760
NL-3000 DK Rotterdam(NL)
(84) BE

Applicant: UNILEVER PLC
Unilever House Blackfriars P.O. Box 68
London EC4P 4BQ(GB)
(84) GB

(72) Inventor: Cain, Frederick William
Dr. Blookerstraat 12
NL-2271 VL Voorburg(NL)
Inventor: De Jong, Frederik Roelof
Van Boisotstraat 31
NL-3132 XK Vlaardingen(NL)
Inventor: Lanting-Marijs, Jacqueline Adrienne
Wipperspark 88
NL-3141 RD Maassluis(NL)
Inventor: Verschuren, Jozephus Johannes
Dorpsdijk 83
NL 3161 Rhoon(NL)

(74) Representative: Keppels, Willem Richard
Engelbertus Gerardus, Drs. et al
Unilever N.V. Patent Division P.O.Box 137
NL-3130 AC Vlaardingen(NL)

(54) Improvements relating to spreads.

(57) The invention relates to fatty materials and to improvements in spreads obtained by the use of such materials.

Crystalisation properties of the sucrose fatty acid fat replacers differ from the crystalisation properties of normal fats. The skilled man therefore faces difficulty in accomodating these esters in his spread products and retaining the desired rheology and processing properties.

Properties of such spreads are improved by the presence of a range of relatively short and long chain carboxyllic acid esters in the fatty phase. In a particular a fatty material suitable for use as the fat blend of a spread comprises a quantity of fat-replacer, wherein the total fraction of palm-fat (palm oils and palm kernel fats) derived fat-replacer is between 7-55%wt of the total fat-replacer and the balance of the fat-replacer is derived from seed-oils (such as sunflower and soyabean).

# IMPROVEMENTS RELATING TO SPREADS

The present invention relates to fatty materials comprising in part or in whole fat-replacers and to improvements in edible spreads obtained by the use of such materials. In particular, the fat replacers with which the invention is concerned are indigestible polyol fatty acid polyesters, particularly sucrose fatty acid esters.

"Spreads", as the term is used herein, includes spreadable, edible compositions which are based on oil and water emulsions, typically being dispersions of a waterphase in a fatty phase. Such emulsions include those structurally similar to margarines and spreads with a reduced fat content as compared with margarines.

A wide range of commercially available triacylglyceride fats are known and available for use in spreads, most of which are of plant origin. It is commonplace in the industry to refer to fats by means of their botanical source rather than their chemical composition. For example, it is commonplace to refer to fully hydrogenated palm oil rather than specify the actual triglyceride components of the product of hydrogenation. For convenience, the present invention will be defined in terms of such plant sources of fats and with reference to the use of fat replacers prepared from these fats.

The use of fat substitutes in margarines is suggested in EP 020421 (Orphanos et al.: to the Proctor & Gamble Company). Such margarines have a "fatty" phase which generally comprises one or more triacylglyceride fats and one or more fat-replacers. Products are also envisaged which contain no triacylglyceride but have a "fat" phase consisting essentially of one or more fat- replacers. For convenience such a phase will be referred to herein as a 'fatty' phase whether it contains triacylglyceride fats in addition to the or each edible fat-replacer or comprises exclusively fat-replacers and no triacylglyceride fat. Further reference to edible fat-replacers can be found in US 4005195, US 4005196, EP 223856, EP 236288 and EP 235836.

Further detail on the manufacture of sucrose fatty acid ester ('SPE') fat-replacers as that term is intended herein can be found in US 3600186 (Mattson et al.: to the Proctor & Gamble Company). That document describes low-calorie, fat containing, food compositions in which at least a portion of the triacylglyceride fat is replaced with a polyol fatty acid polyester such as a sucrose fatty acid ester in which at least four of the hydroxyl groups have been esterified with a fatty acid of chain length from 8-22 carbons.

Other fat-replacers are known, including waxes such as jojoba and other polyol fatty acid esters.

The advantage of using sugar fatty acid esters as fat replacers in edible spreads is that these fat-replacers are generally indigestible in the human or animal gut and do not therefore contribute to the total calorific content of the diet. In addition, it is believed that extensive use of these products may cause a lowering of blood cholesterol. There is a need, at least in certain forms of medical treatment, for spreads of this type.

In conventional margarine and other spread production, careful attention must be given both to the solids content during processing and to the solids content of the final product. In particular, the process stream must contain a certain amount of solids before the product can be made successfully and these solids should be present very shortly after the product reaches a particular processing temperature. Attention must also be paid to the phenomenon of 'post-hardening', that is to say, increase of the solids content on storage. If post-hardening is excessive, a product which has good spreading properties when freshly made may become unacceptably hard after the passage of hours or even after some days.

The vegetable triacylglyceride fats used in conventional spreads are commonly classified into three types. The "seed oils" are generally liquid oils at room temperature (unless hydrogenated), and in their native form contain relatively large proportions of unsaturated and poly-unsaturated fatty acid residues. These seed-oils are obtained from 'oilseeds' such as sunflower, safflower, rapeseed, soyabean, maize and ground-nut. The "palm-fats", which tend to lack poly-unsaturated fatty acid residues, are obtained from tropical palms and can be sub-divided into the classical palm fats, obtained from the pulp of the oil-palm (genus Elaeis ), which are rich in palmitic acid and the so-called "laurics" such as palm-kernel fat (obtained from the kernel of E. guineensis ), tucum, murumuru, ouricuri, cuhune, babbassu and coconut fats. The classical palm fats are distinguished from the laurics by the moderately high levels of palmitic acid residues in the former and characteristic presence of short-chain fatty acids in the latter. For the purpose of this specification the fats obtained from the pulp of species of genus Elaeis will be referred to as "palm-oils" whether in liquid or solid form, and the group of palm-oils together with the lauric fats will be referred to as "palm-fats". Further information on the composition of naturally occurring oils and fats is to be found in Bailey's Industrial Oil and fat Products (Wiley 1979, fourth edition) volume 1 chapter 6.

Considerable attention has been given to solving the problems associated with solids content during processing of conventional spreads by selecting particular combinations of fats of different types to prepare the fat blends used in margarine and other spread production. Over a period of many years formulations for the fat phase of spreads have been refined such that the difficulties associated with in-line and post-processing crystallisation have been overcome. An illustrative example of such a formulation is found in FR 2520003 wherein a particular crystalisation defect known as "sandiness" is overcome by the incorporation of palmitic acid rich fats into a fat blend.

The manufacture of fat-replacers from oilstocks of each of the abovementioned types of fat has been considered. Mention is made of this possibility in EP 0304130.

With products which contain such fat replacers as are mentioned in the prior art, similar problems are encountered as are known in conventional spread production. EP 0290421 addresses the problem of crystallisation rates in fatty materials comprising sucrose fatty acid esters and states that these may be controlled by the use of "intermediate-melting" sucrose fatty acid ester hardstocks. EP 0290421 is further concerned with promotion of the recrystallisation of previously heated fatty materials in the gut so as to avoid the problem of "anal leakage" which occurs when undigested liquid fatty materials penetrate into the colon. The abovementioned document teaches that its approach to controlling the crystallisation of the fatty materials can be of use both in preventing "anal-leakage" and in edible spread processing.

In EP 0290421, use is made of the well known phenomenon that crystallisation of a solid from a supercooled melt proceeds more rapidly in the presence of a large number of crystalisation nuclei than in the abscence of these nuclei. In this citation intermediate melting sucrose fatty acid esters are used to promote crystalisation. The cited specification gives an example of an intermediate melting sucrose fatty acid esters as that obtained by esterification of sucrose with fatty acid methyl esters of a fully hydrogenated soyabean oil and with fatty acid methyl esters of a partially hydrogenated soyabean oil.

EP 0290421 also discloses the producion of palm-oil based sucrose fatty acid fat-replacers. No detailed consideration of the behavior of these fat-replacers in spreads is to be found in that document.

From the abovementioned document (EP 0290421) it can be seen (as might be expected) that crystalisation properties of the sucrose fatty acid fat replacers differ from the crystalisation properties of triacylglyceride fats. These differences are confirmed by experimental work. The skilled man therefore faces difficulty in accomodating the sucrose fatty acid esters and other sugar based fat-replacers in his spread products and retaining the overall product rheology and processing properties which are desired.

These difficulties are to some extent overcome by EP 0304130 (Cain et al.: to Unilever) but the solutions elaborated therein are limited to fatty materials with a solids content at 5°C between 10 and 30%. The fatty materials disclosed in EP 0304130 comprise seed-oil (soyabean oil) based sucrose fatty acid esters in combination with soyabean triglycerides. It is desirable in spread manufacture to work with fatty materials having a higher solids content at this temperature. However such materials have previously been found to result in unacceptably hard and/or brittle spread products at normal use temperatures.

A particular advantage of a solids content at 5°C above 30% is a butterlike rheology leading to improved consumer acceptance.

One object of the present invention is to provide emulsions which comprise less than 80% of a fat-replacer containing fatty phase but which have rheological properties such that the emulsions are suitable for use as edible spreads.

A further object of the invention is to provide formulations for acceptable spreads containing high levels of solid fat. Particular embodiments of the invention provide spreads of which the fat-phase has a solids content at 5°C above 30% and which can be used to manufacture acceptable products.

We have determined that the spread properties of an emulsion comprising an aqueous phase and a fatty phase as defined herein are improved by the presence of a range of both relatively short and long chain carboxyllic acid esters in the fatty phase. It is convenient to express the proportions of carboxyllic acid residues present in terms of the characteristic fatty acid residues present in conventional fats, such as palm fats (classical palm-oil and/or lauric fats) or such as seed-oils. As mentioned above, these classes of fats are characterised by the presence of characteristic ratios of fatty acid residues. We have determined that in general a specific proportion of the fat blend should comprise one or more fat-replacers derived from palm-fats (palm-oils and/or laurics) and the balance of the fatty materials present should be derived from seed-oils either as seed-oil based fat replacers or as triacylglyceride fats. For the purposes of this specification a palm-fat derived fat replacer may not only be obtained synthetically from a palm-fat feedstock but also includes a fat-replacer which has a glyceride chain length distribution substantially equivalent to that of a palm-fat when obtained from mixed glyceride esters of other sources.

Accordingly, a first aspect of the present invention provides a fatty material suitable for use as the fat blend of a spread, said fatty material comprising between 7-55%wt of palm-fat derived fat-replacer. The total proportion of palm-fat derived fat replacer is arrived at by calculating the sum of the the contribution of the or each palm-fat derived fat replacer in the total fat blend. The contibution of each palm-fat derived fat-replacer is calculated as the product of the percentage of that fat replacer in the fat blend and the fraction of palm-fat equivalents in the fat replacer. Thus, a blend of 10% of a palm fat derived fat replacer with other fatty materials would comprise 10% palm fat derived fat replacer irrespective of the overall fat level in the product.

Typically the balance of the fatty materal is derived from seed-oils.

We have determined that the use of fat blends consisting purely of palm-fat derived fat-replacers or the use of purely seed-oil derived fat-replacers in combination with triacylglycerides does not yield the rheological properties which a spread manufacturer desires. In particular products with purely palm-fat derived fat replacers tend to be too hard and/or brittle at the required solids level. As mentioned above products which contain purely seed-oil derived fat-replacers also suffer from this problem at high N-lines. While these 'pure' systems may be useful as shortenings or find applications in warm use they are not well suited to use as the fatty phase of spreads.

The mixed systems disclosed herein have a depressed hardness and are suitable for use in spreads. Without wishing to be restricted by theory, it is believed that this unexpected behaviour might be due to some eutectic effects in the mixed crystal system.

Preferably, the fraction of palm-fat derived fat-replacer is between 10-50%wt of the total fatty material. Most preferably, the fraction of palm-fat derived fat-replacer is between 20 and 40%wt of the total fatty material, in which range there is relatively little variation of product properties with palm-fat derived fat-replacer content. It is believed that optimal spread properties are achieved when the palm-fat derived fat-replacer content is around 25-30%wt of the total fatty materials.

The balance of the fatty material comprises fat-replacers derived from seed oils and/or triglycerides obtained from seed-oils.

The palm-fats and the seed-oils used in the production of the fat-replacers may be mixed in the desired ratio before the formation of the fat-replacers. Preferably, the palm-fats and the seed-oils are separately transformed into fat-replacers which are then mixed in the desired proportions.

In particular embodiments of the invention the palm-fat is selected from the group comprising palm-oils and lauric fats, preferably palm-kernel fat or mixtures of the two. These fats can be unmodified, hydrogenated or fractionated fats. Where mixtures of both palm oil and palm-kernel fats are used it is prefferred that the palm-kernel should be in excess compared to the palm oil. Ratios of 75-50 palm-kernel fat to 25-50 palm oil lead to acceptable products. As with the overall fat-replacer, it is believed possible to mix two or more fat-replacers prepared separately. However it is preferable to mix one or more palm-oils and palm-kernel fats before the preparation of a fat-replacer.

In particular embodiments of the invention the seed-oil is soybean oil. It is envisaged that this might be replaced by sunflower, safflower or any of the other seed-oils.

While it is possible to envisage spreads of which the fatty phase comprises only fat-replacer in the absence of triacylglyceride fat, it is preferable that a portion of triacylglyceride fat is present. Preferably, the triacylglycerol portion of the fatty phase comprises from 40-60%wt of the fatty phase. These additional triacylglyceride fats are selected from seed-oils in a native or hydrogenated form. Unhydrogenated sunflower oil and hydrogenated soybean oil have been found particularly suitable.

A second aspect of the present invention provides a spread comprising a dispersion of an aqueous phase in a fatty phase as defined above.

Such spreads typically comprise 80%wt or less of the said fatty blend the balance up to 100%wt of the spread being the aqueous phase. We have determined that spreads with a reduced total content of fatty material can be made using the fatty materials of the present invention. Acceptable spreads can be made with 40%wt of a fatty phase and 60%wt of an aqueous phase. Where, in a 40%wt total fatty phase product, the fatty phase comprises 50%wt of a fat-replacer and 50% of a triacylglyceride fat, a product results which has approximately 20% of the triacylglyceride fat content of butter or conventional margarine.

It is a particular advantage of the embodiments of the present invention that the fatty materials provided for the manufacture of margarines (80%wt fat) are also suitable for the manufacture of halvarines (40%wt fat). 40% fat products are accepted by consumers and offer the advantage that the overall calorific content of the product is already reduced to approximately half that of butter or margarine by the addition of waterphase, before the effect of the fat replacer is taken into account. The use of a waterphase to reduce the calorific content, as opposed to the use of fat-replacers, offers considerable advantages of cost.

The invention will be further described by means of examples and by reference to the accompanying figures, wherein:

FIG 1: Is a graph of hardness values of a margarine (80% fat product) according to the present invention (together with some comparative examples), as measured at 5°C plotted against the proportion of palm fat based fat-replacer in the total fatty material present,

FIG 2: Is a graph of hardness values of a halvarine (40% fat product) according to the present invention (together with some comparative examples), as measured at 5°C plotted against the proportion of palm fat based fat-replacer in the total fatty material present,

FIG 3: Is a graph of hardness values at 5°C of a margarine according to the present invention (together with the comparative examples), plotted against the proportion of saturated 14, 16 and 18 carbon fatty acid of sucrose polyester in the total fatty material, and,

FIG 4: Is a graph of hardness values at 5°C of a halvarine according to the present invention (together with the comparative examples), plotted against the proportion of saturated 14, 16 and 18 carbon fatty acid of sucrose polyester in the total fatty material.

EXAMPLES 1-7:

Halvarines, that is products containing around 40% of a fatty phase, were prepared using the basic formulation given below in table 1.

| TABLE 1: | % |
|---|---|
| Fat blend | 40.00 |
| Hymono 8903 | 0.20 |
| $\beta$-Carotene (0.4%) | 0.20 |
| Gelatin | 3.00 |
| Skimmed milk powder | 1.00 |
| Salt | 0.40 |
| Potassium sorbate | 0.13 |
| pH to 5.1 with lactic acid | |
| Water | to 100 |

Five batches of products were prepared in which the following fatty phases were used:

(2). 20SPE(H1)/10SPE(H2)/20SPE(moBO28)/25diBO36/25SF

(3). 40SPE(inES)/60SF

(5). 25SPE(H1)/10SPE(inES)/15SPE(moBO28)/20diBO36/30SF

(6). 10SPE(inES)/20SPE(H1)/20SPE(moBO28)/20diBO36/30SF

(7). 15SPE(moBO28)/35SPE(PO44)/25diBO36/25SF

These blends were selected to have similar melting characteristics in terms of their solid contents at increasing temperature, that is to have similar "N-lines". As comparative examples the following fat phases were also employed in the production of a 40% spread product.

* (1). 65SPE(PO44)/35SF

* (4). 10SPE(H2)/40SPE(moBO28)/45diBO36/5SF

These two additional fat phases had similar N-lines to the examples of the invention given above, but are selected so as to fall outside of the claimed range of palm-fat based fat replacer.

The notation used herein is largely self explanatory: "5SF" (as used in example 4) means that 5% by weight of the total fatty blend comprised unhydrogenated sunflower oil. "moBO28" (as used in several examples) is a soyabean oil hardened to a slip melting point of 28°C by the so-called 'moldo' process, the two-stage hydrogenation is indicated in cases such as "diBO36". "20SPE(moBO28)" (as used in example 6) means that 20% of the blend comprised a sucrose polyester of which the fatty acid residues were substantially equivalent in terms of relative proportion of carbon chain lengths to those found in moBO28.

The non-standard abbreviations used are as follows:

SPE(H1) is SPE(62PK39/38PO58)

SPE(H2) is SPE(55BO65/45moBO28)

SPE(inES) is SPE(53PK39/47PO58)

The use of the slash (/) indicates that the sucrose fatty acid ester was equivalent to that which would have been obtained by esterifiying a mixture of the two components separated by the slash with the sugar. Thus SPE(inES) is a sucrose polyester which is obtained by esterifying sucrose with a mixture comprising 53%wt of palm-kernel fat hydrogenated to a melting point of 39°C and 47%wt of palm-oil hydrogenated to a melting point of 58°C.

The N-values of the above blends as measured after a stabilization period of one hour at 0°C, are given in table 3 below. It can be seen from table 3 that the blends are somewhat similar in their melting properties, and that all of the blends have an N-line such that the solids index at 5°C is above the limit of 30%wt given in EP 304130. From the above composition data it can be seen that the comparative examples fat phases (1) and (4) illustrate the cases when either (as in example 1) a relatively high proportion of the fat-replacer is derived from palm fat or (as in example 4) no palm fat is present in the fat-replacer.

N-lines were measured by NMR according to the procedure described in Fette, Seifen, Anstrichmittel 80(5) 180-186 (1978) with temperature history mentioned above.

Products were prepared as follows. The triglyceride and sucrose polyester components of the fat phase were blended together at 70°C and the Hymono 8903 (emulsifier) was added. This blend was cooled to approximately 50°C and the β-carotene was added as is conventional in spreads production to provide colour.

The gelatin and skimmed milk powder were dispersed in the water at 80°C using an Ystral Ultra Turrax. The salt and potassium sorbate were then added. This water phase was cooled to 45°C and the pH was adjusted to 5.1 with lactic acid. The aqueous phase was poured into a premix vessel that was jacketed at a temperature of 40°C. The above fat phase was dispersed in the aqueous phase to give an o/w emulsion pre-mix.

The products were made by a standard high-shear inversion of the pre-mix on an A--C*--A--C microvotator line ('VOTATOR' is a Registered Trade Mark), in which the C* unit is the invertor. Details of the process conditions are given in table 2 below:

Table 2  SEE Halvarines – Process conditions

| Blend | | PM | A | C | A | C → |
|---|---|---|---|---|---|---|
| | Shaft speed (rpm) | | 1000 | 1500 | 500 | 300 |
| 1 | cool.temp. | | +5 | – | +12 | – |
| | exit.temp. | | 12.8 | 34.2 | 18.8 | – |
| 2 | cool.temp. | | +5 | – | +12 | – |
| | exit.temp. | | 12.0 | 30.0 | 15.3 | 19.2 |
| 3 | cool.temp. | | +5 | – | +5 | – |
| | exit.temp. | | 8.5 | 30.4 | 15.3 | 17.2 |
| 4 | cool.temp. | | +7 | – | +5 | – |
| | exit.temp. | | 10.9 | 30.9 | 14.0 | 17.8 |
| 5 | cool.temp. | | +7 | +25 | +5 | – |
| | exit.temp. | | 11.9 | 27.5 | 15.0 | 19.5 |
| 6 | cool.temp. | | +7 | +25 | +5 | – |
| | exit.temp. | | 11.6 | 30.0 | 15.2 | 19.8 |
| 7 | cool.temp. | | +5 | – | +8 | – |
| | exit.temp. | | 13.5 | 31.9 | 15.9 | 20.5 |

The spreads were stored for one day at 15°C, one week at 5°C and were then analysed using a standard set of physical tests. The results of these tests are given in table 3:

6

Table 3

| SPE Halvarines - Physical properties | | | | | | | |
|---|---|---|---|---|---|---|---|
| Blend | *1 | 2 | 3 | *4 | 5 | 6 | 7 |
| Hardness | | | | | | | |
| C5 | 2600 | 1590 | 1160 | 2525 | 1060 | 930 | 1390 |
| C10 | 1730 | 1400 | 910 | 2425 | 810 | 630 | 730 |
| C15 | 1350 | 950 | 670 | 1760 | 710 | 450 | 505 |
| C20 | 650 | 385 | 375 | 1130 | 425 | 295 | 300 |
| Salt rel. | | | | | | | |
| T 100% | 37.2 | 38.9 | 36.1 | 41.0 | 34.0 | 33.3 | 33.7 |
| Conduct. | | | | | | | |
| Fresh 5°C | 0.004 | 0.018 | 0.016 | 0.001 | 0.003 | 1.170 | 0.004 |
| N-line | | | | | | | |
| N5 | 44.8 | 39.2 | 39.3 | 40.9 | 44.9 | 40.3 | 42.6 |
| N10 | 39.2 | 36.1 | 36.5 | 33.2 | 41.2 | 36.5 | 38.7 |
| N20 | 22.7 | 20.9 | 24.2 | 15.7 | 26.2 | 21.5 | 22.3 |
| N30 | - | 4.8 | 4.7 | 3.7 | 3.3 | 2.1 | 4.0 |
| N35 | 0.1 | 1.1 | 0.1 | 1.3 | 0.2 | 0.0 | 0.2 |

From table 3 it is noted that the fatty blends of comparative examples 1 and 4, while having similar N-lines to those of the remaining examples, exhibit C-lines which are unsuitable for use of the fat blend in spreads. In particular the C-5 of these two comparative examples is too high for use in a spread, indicating that the products would be too hard and too brittle for use.

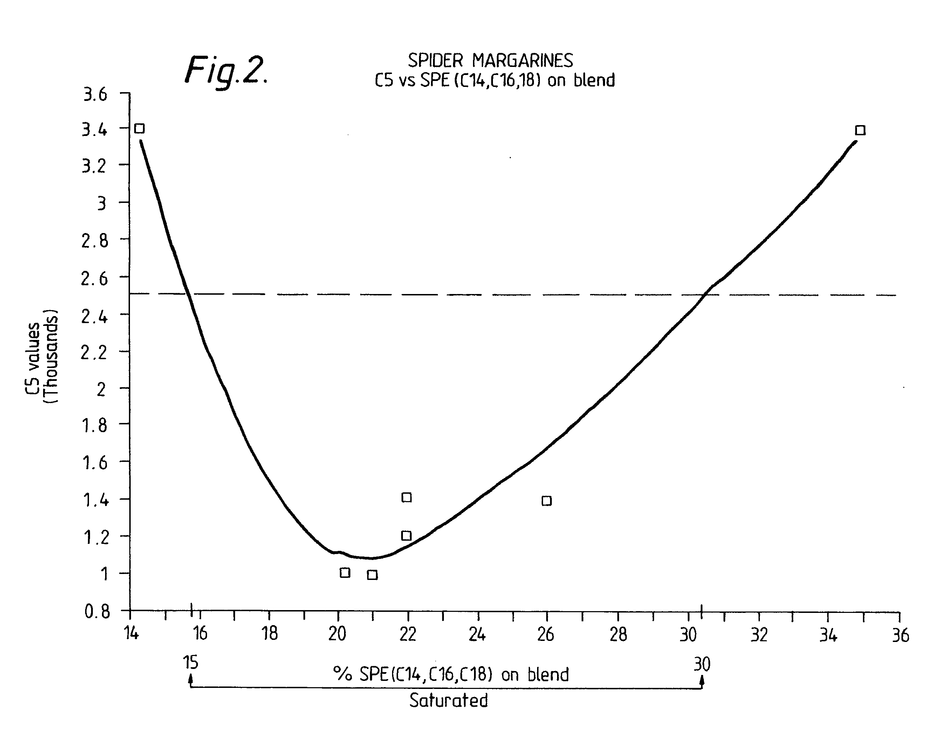

Turning now to figure 2, it can be seen that there is a clear relation between the C-value at 5°C and the fraction of palm-fat derived sucrose fatty acid polyester in the total fatty phase. This hold true whether 'mixed' fatty acid residues are present on the same sucrose molecule (as in example 3) or where a plurality of different sucrose polyesters are mixed (as in the remaining examples 2,5,6 and 7). From the graph is can seen that that products towards the centre of the claimed range are acceptable, whereas products at the limits of the claimed range are barely acceptable. For the purposes of the present specification an acceptable C-value at 5°C for spreads is considered to be less than 2500.

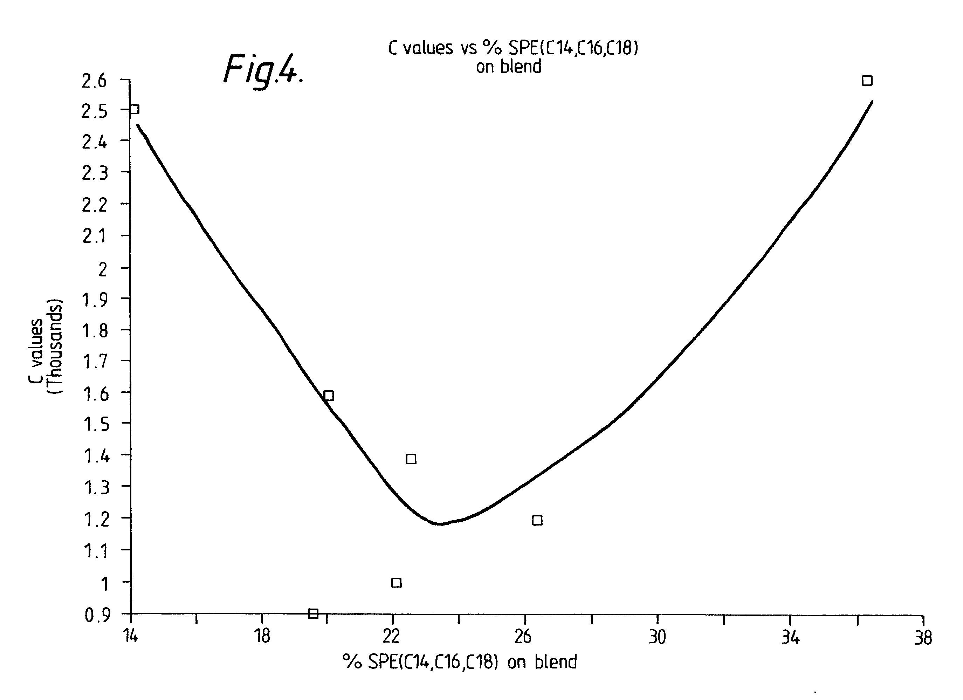

Figure 4 is a plot of hardness values at 5°C of a halvarine (together with the comparative examples), plotted against the proportion of saturated 14, 16 and 18 carbon fatty acid of sucrose polyester on total fatty material. This illustrates how it is also possible to characterise these embodiments of the invention in terms of the fraction of sucrose polyester of 14-18 carbon saturated fatty acid residues present in the fat blend. Subsequent to the making of the invention, investigation revealed that products with 15-30wt% of the fat blend being equivalent to sucrose polyesters of 14-16 carbon saturated fatty acids esterified with sucrose generally have an acceptable hardness (C-5 less than 2500) whereas other proportions may lead to products which are too soft. As with the characterisation by means of the source fats, the skilled man is faced with a reasonable operating window for optimal products. In this instance this lies between 18 and 27%wt of the C14-C18 saturated glycerides on total blend.

EXAMPLES 8-14:

Margarines, that is products containing around 80% of a fatty phase, were prepared using the basic formulation given below in table 4:

| TABLE 4: | % |
|---|---|
| Fat blend | 80.00 |
| Almul mg 4203 | 0.12 |
| B-Carotene (0.4%) | 0.10 |
| Bolec ZDT | 0.10 |
| Whey Powder | 3.00 |
| Salt | 0.40 |
| Potassium sorbate | 0.13 |
| pH to 5.2 with lactic acid | |
| Water | to 100 |

Seven batches of product were made in which the same fat phases were used as in the previous examples 1-7 with examples 1 and 4 again being comparative trials.

The triglyceride and SPE components of the fat phase were blended together at 70°C and the Hymono 8903 and Bolec ZTD emulsifiers were added. This blend was cooled to approximately 50°C and the β-carotene colour was added.

The whey powder were dispersed in the water at 80°C using an Ystral Ultra Turrax. The salt and potassium sorbate (preservative) were then added. This water phase was cooled to 45°C and the pH was adjusted to 5.2 with lactic acid.

The above-mentioned fatty and aqueous phases were mixed in a premix vessel that was jacketed at a temperature of 40°C.

The products were made via a fat-continuous process on an A--A--C microvotator line. Details of the process conditions are given in Table 5.

**Table 5:     SPE Margarines – Process conditions**

| | | PM – | A – | A – | C |
|---|---|---|---|---|---|
| | Shaft speed (rpm) | | 800 | 500 | 150 |
| Blend | | | | | |
| 1 | cool.temp. exit.temp. | | +2 11.8 | +7 20.0 | – 15.9 |
| 2 | cool.temp. exit.temp. | | –3 8.3 | –2 17.5 | – 14.8 |
| 3 | cool.temp. exit.temp. | | 0.0 9.1 | +4 11.1 | – 15.3 |
| 4 | cool.temp. exit.temp. | | 0.0 8.3 | +4 10.4 | – 13.8 |
| 5 | cool.temp. exit.temp. | | 0.0 9.9 | +4 12.1 | – 15.7 |
| 6 | cool.temp. exit.temp. | | 0.0 9.2 | +4 11.5 | – 14.9 |
| 7 | cool.temp. exit.temp. | | –3 8.6 | –2 15.5 | – 15.3 |

The spreads were stored for one day at 15°C, one week at 5°C and were then analysed using the same set of standard physical tests as used for example 1-7. The results of these tests are given in table 6.

Table 6

| SPE Margarines - Physical properties | | | | | | | |
|---|---|---|---|---|---|---|---|
| Blend | 1 | 2 | 3 | 4 | 5 | 6 | 7 |
| Hardness | | | | | | | |
| C5 | 3400 | 1010 | 1400 | 3400 | 1420 | 1000 | 1210 |
| C10 | 1780 | 850 | 1070 | 3400 | 1270 | 920 | 670 |
| C15 | 1100 | 455 | 875 | 2200 | 800 | 690 | 475 |
| C20 | 740 | 320 | 410 | 1800 | 350 | 200 | 175 |
| Salt rel | | | | | | | |
| T 100% | 40.2 | 40.7 | 38.6 | 41.3 | 36.9 | 37.2 | 39.2 |
| N-line | | | | | | | |
| N5 | 44.8 | 39.2 | 39.3 | 40.9 | 44.9 | 40.3 | 42.6 |
| N10 | 39.2 | 36.1 | 36.5 | 33.2 | 41.2 | 36.5 | 38.7 |
| N20 | 22.7 | 20.9 | 24.2 | 15.7 | 26.2 | 21.5 | 22.3 |
| N30 | - | 4.8 | 4.7 | 3.7 | 3.3 | 2.1 | 4.0 |
| N35 | 0.1 | 1.1 | 0.1 | 1.3 | 0.2 | 0.0 | 0.2 |

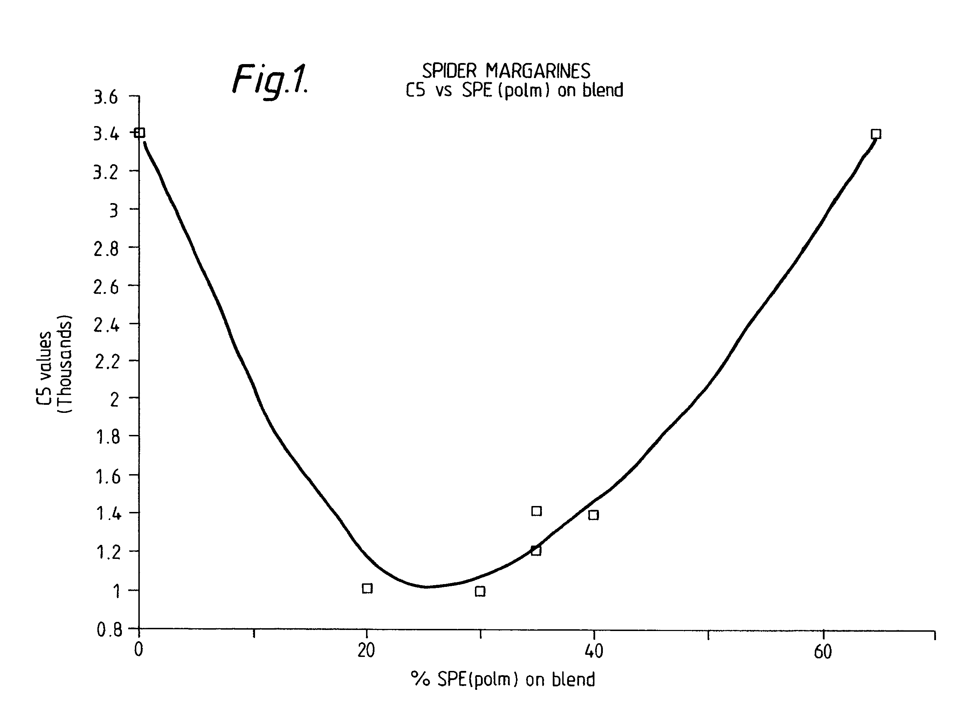

The C-5 was plotted against the palm-fat based fat-replacer fraction in figure 1.

Turning to figure 1, it can again be seen that there is a clear relation between the suitability of a fatty blend for use in a spread and the fraction of palm based fat-replacer in the total fatty material. As with the previous examples, those spreads which were prepared with both highest and lowest fractions of palm-based fat-replacer were unsuitable for use in spreads, again being too hard and brittle for use. In mixed systems fat phases with 7-55% of total palm-derived SPE fat-replacer as a fraction of the total fat blend had acceptable properties. In particular, products with a palm based SPE content of 20-40% exhibited the most marked depression in C5 with the overall low between 20 and 30%wt.

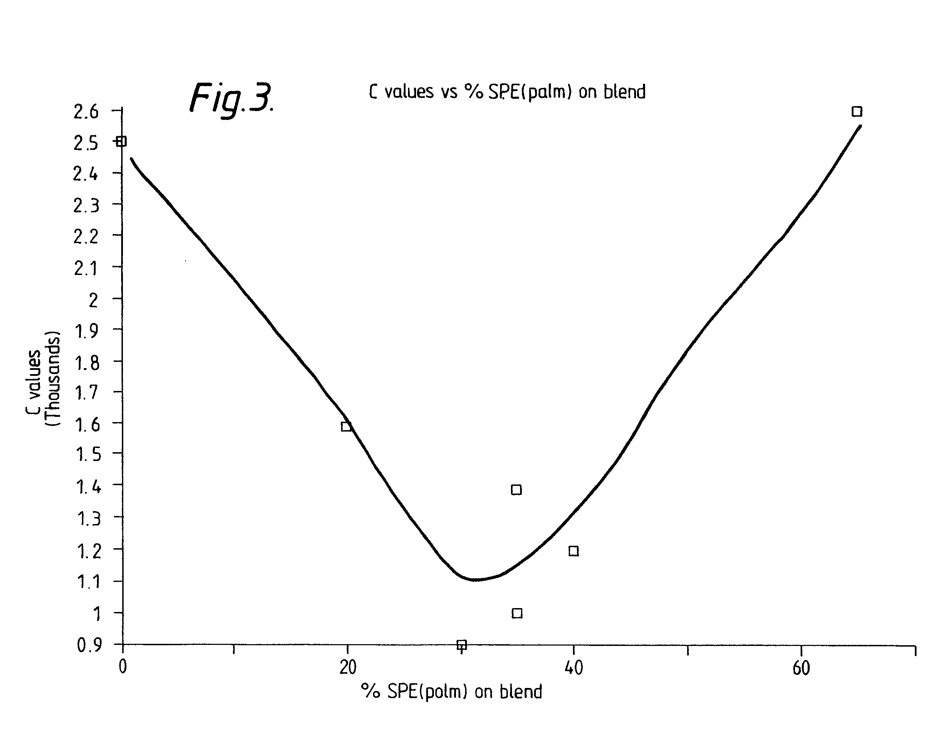

Figure 3 is a plot of hardness values at $5\,^\circ C$ of a margarine (together with the comparative examples), plotted against the proportion of 14, 16 and 18 carbon saturated fatty acid of sucrose polyester in the total fatty material of the margarine. This again illustrates how it is also possible to characterise these embodiments of the invention in terms of the fraction of sucrose polyester of 14-18 carbon fatty acid residues present in the fat blend. In this instance the range of acceptance lies between 17 and 29%wt of saturated C14-C18 glycerides with an optimum at about 21%wt of the C14-C18 fatty acid residues.

Various modifications may be made within the scope of the present invention. For example, whereas it is envisaged that the starting materials should be natural oils and fats as are commonly available in the marketplace it is envisaged, on the basis of the examples given of the effect of the 14-18 carbon residue analysis, that a mixture of fatty acid methyl esters having the same fatty acid residue content as a mixture of natural fats can be employed as an alternative starting material.

## Claims

1. A fatty material suitable for use as the fat blend of a spread, said fatty material comprising 7-55%wt of palm-fat derived fat-replacer as defined herein.

2. Fatty material of claim 1 comprising 10-50%wt of said palm-fat derived fat-replacer.

3. Fatty material of claim 2 comprising 20-40%wt of said palm-fat derived fat-replacer.

4. Fatty material of claim 1 wherein said palm derived fat-replacer comprises a fat-replacer derived from palm-fat of genus Elaeis .

5. Fatty material of claim 4 wherein the palm derived fat replacer comprises a fat replacer derived from a blend of palm-fat of genus Elaeis and at least one lauric fat.

6. Fatty material of claim 1 further comprising at least one triacylglycerol component.

7. Fatty material of claim 6 wherein the sum of the or each triacylglycerol component comprises from 25-60%wt of the fatty phase.

8. Fatty material of claim 6 wherein the at least one triacylglycerol component comprises an oil substantially free of solid fat at 5°C.

9. Fatty material of claim 8 wherein said oil is a seed-oil.

10. Fatty material of claim 1 further comprising at least one seed-oil derived fat-replacer.

11. Fatty material of claim 10 wherein the sum of the or each seed-oil derived fat-replacer comprises from 0-40% of the fatty phase.

12. Fatty material suitable for use as the fatty phase of an edible spread comprising at least one fat-replacer and at least one triacylglyceride component, characterised in that, 15-30% of the fatty material comprises 14-18 carbon saturated fatty acid esters.

13. Fatty material suitable for use as the fatty phase of an edible emulsion comprising 7-55% of a palm-fat derived fat-replacer, 25-60% of a seed-oil triacylglyceride component and, optionally, 0-40% of a seed-oil derived fat-replacer.

14. Edible spread comprising a dispersion of an aqueous phase in a fatty material according to claim 1 or claim 13.

15. Edible spread of claim 14 wherein the aqueous phase comprises at least 20%wt of the spread.

16. Edible spread of claim 15 wherein the aqueous phase comprises at least 60%wt of the spread.

17. Edible spread comprising a continuous fatty phase and a dispersed aqueous phase wherein the fatty phase comprises one or more indigestible polyol fatty acid polyesters and one or more triacylglyceride fats, wherein the fatty phase is single stream processed, wherein the fatty phase has a solids profile of N5 greater than 30% and wherein the spread has a hardness of C5 less than 2500.

18. Edible spread of claim 17 wherein the N5 lies in the range 35-45.

19. Edible spread of claim 17 wherein the C5 lies in the range 1000-1600.

Fig.1.

SPIDER MARGARINES
C5 vs SPE (polm) on blend

C5 values (Thousands)

% SPE(polm) on blend

EP 0 415 468 A2

Fig.2.

SPIDER MARGARINES
C5 vs SPE (C14,C16,18) on blend

% SPE(C14,C16,C18) on blend

Saturated

EP 0 415 468 A2

Fig.3.    C values vs % S.P.E(palm) on blend

C values (Thousands)

% SPE(polm) on blend

EP 0 415 468 A2

Fig.4.

C values vs % SPE(C14,C16,C18) on blend

C values (Thousands) vs % SPE(C14,C16,C18) on blend